# EUROPÄISCHE PATENTSCHRIFT

(11) **EP 2 167 827 B1**
(45) Veröffentlichungstag und Bekanntmachung des Hinweises auf die Patenterteilung: **20.03.2013**
(21) Anmeldenummer: 08784204.3
(22) Anmeldetag: 17.06.2008
(51) Int. Cl.: F16B 21/18, F16D 3/223, F16D 1/116

(54) **VERBINDUNGSANORDNUNG**
CONNECTING ARRANGEMENT
SYSTÈME DE LIAISON

(30) Priorität: 18.06.2007 DE 102007028437; 06.03.2008 DE 102008013042
(43) Veröffentlichungstag der Anmeldung: 31.03.2010
(73) Patentinhaber: Shaft-Form-Engineering GmbH, 63165 Mühlheim (DE); BF New Technologies GmbH, 63165 Mühlheim (DE)
(72) Erfinder: DISSER, Claus, 63500 Seligenstadt (DE)
(74) Vertreter: Schmidt, Oliver Jürgen
(86) Internationale Anmeldenummer: PCT/DE2008/000981
(87) Internationale Veröffentlichungsnummer: WO 2008/154899

(56) Entgegenhaltungen:
- WO-A-2006/087115
- DE-A1- 2 655 517
- DE-A1- 10 215 657
- DE-A1-102004 014 112
- DE-A1-102006 061 408
- GB-A- 855 047
- US-A- 4 343 581
- BLACK T: "QUICK GUIDE TO RETAINING RINGS" DESIGN ENGINEERING, MORGAN-GRAMPIAN LTD. LONDON, GB, Bd. 51, Nr. 2, 1. Februar 1980 (1980-02-01), Seiten 60-62, XP001600323 ISSN: 0308-8448

## Beschreibung

Die Erfindung betrifft eine Verbindungsanordnung mit einem Sicherungsring.

Eine gattungsgemäße Verbindungsanordnung ist aus DE-A-10215657 bekannt.

Aus der DE 37 26 135 A1 ist eine Antriebswelle für ein Kraftfahrzeug bekannt, die beispielsweise mit einem Wellenzapfen an ein Getriebe angebunden ist. Die Welle ist dabei auf der dem Getriebe zugewandten Seite mit einem Gelenk versehen, dessen Innennabe als eine profilierte Hülse ausgebildet ist, in welche ein Zapfen der Gelenkwelle eingesteckt ist. Der Zapfen der Gelenkwelle ist bei dieser bekannten Gelenkwelle mittels eines Sicherungsrings in der Hülse gegen axiale Verschiebung gesichert und über einen Dichtungsring abgedichtet. Der Dichtungsring ist dabei in Einsteckrichtung des Wellenzapfens in die Hülse weiter in die Hülse hinein verlagert angeordnet als der Sicherungsring, welcher an einem äußeren Randbereich der Hülse vorgesehen ist. Dies ermöglicht es, dass der Sicherungsring für die Montage und Demontage gut zugänglich ist.

Sicherungsringe sind zur axialen Verbindung von Wellen und Hülsen in verschiedenen Ausführungsformen bekannt. So werden beispielsweise von der Seeger-Orbis GmbH & Co. OHG sowohl sogenannte Sprengringe mit einem im Querschnitt kreisförmigen Profil als auch Sicherungsringe mit einem Querschnitt rechteckigen Profil angeboten, die jeweils in einander gegenüberliegende Nuten der Welle und der Hülse eingebracht werden können. Die Sicherungsringe mit rechteckigem Profil sind dabei für eine unlösbare Verbindung beispielsweise zwischen einer Welle und einer Hülse vorgesehen, wobei bei dem Demontieren entweder der Ring abgeschert oder eine der Nuten, in denen der Ring eingebracht ist, zerstört wird. Dagegen erlauben die Sprengringe mit rundem Profil ein zerstörungsfreies Lösen der Verbindung, wenn bei einer Axialbewegung der miteinander verbundenen Bauteile relativ zueinander die Kante einer Nut auf die abgerundete Fläche des Sprengringes trifft und diesen derart radial aufweitet oder zusammendrückt, dass der Ring im Wesentlichen vollständig in einer der Nuten aufgenommen ist.

Da die exakte Lage der lösbaren Sprengringe innerhalb der Nuten nicht eindeutig definierbar ist, kann es beim Lösen derartiger Verbindungen zu Schwierigkeiten kommen. So können die zum Lösen der Verbindung aufzubringenden Kräfte unterschiedlich groß sein oder der Ring kann in eine Position gedrängt werden, in welcher die Verbindung nicht zerstörungsfrei lösbar ist.

In verschiedenen Anwendungsbereichen besteht jedoch Bedarf nach einer axialen Verbindung für Bauteile, die einer definierten axialen Last Stand hält und bei Überschreiten einer vorgegebenen Last leicht lösbar ist.

Aufgabe der vorliegenden Erfindung ist es, eine Verbindungsanordnung der eingangs genannten Art mit einem Sicherungsring sowie bereitzustellen, welche eine zuverlässigere Verbindung zweier Bauteile sowie eine definierte zerstörungsfreie Demontierbarkeit ermöglichen.

Diese Aufgabe wird erfindungsgemäß im Wesentlichen durch eine Verbindungsanordnung nach Anspruch 1 gelöst.

Für viele Anwendungsfälle hat es sich als besonders vorteilhaft erwiesen, wenn die wenigstens eine definierte Schräge in einem Winkel zwischen etwa 15° und etwa 35° gegenüber einer radialen Seitenfläche des Sicherungsringes geneigt verläuft. Ein derartiger Neigungswinkel erlaubt es, axiale Kräfte von beispielsweise etwa einer Tonne durch den Sicherungsring zu übertragen, ohne dass sich die Verbindung löst. Bei einer definierten höheren Kraft, wird der Sicherungsring jedoch gezielt in eine der Nuten der miteinander verbundenen Bauteile gedrängt, so dass die Verbindung zerstörungsfrei gelöst werden kann.

Grundsätzlich können die Neigungswinkel der Schrägen identisch sein. In einigen Anwendungsfällen hat es sich jedoch als günstig erwiesen, wenn die beiden Schrägen in einem unterschiedlichen Winkel gegenüber einer radialen Seitenfläche des Sicherungsringes geneigt verlaufen.

Für die Verbindung zweier Bauteile werden Sicherungsringe häufig auf einem der beiden Bauteile vormontiert, d.h. in eine entsprechende Nut eingebracht, wobei die beiden Bauteile dann unter Aufweitung oder Zusammenpressen des Sicherungsringes in einander geschoben werden. Wenn der Sicherungsring auf einer Welle vormontiert ist, nimmt der Sicherungsring in seinem unbelasteten Zustand eine aufgeweitete Stellung ein und hängt damit lose in der Nut der Welle. Dies hat zur Folge, dass der Sicherungsring beim Einschieben der Welle in eine Hülse abgeschert oder beschädigt werden kann.

Erfindungsgemäß kann dies dadurch verhindert werden, dass der Sicherungsring in einer axialen Richtung gesehen eine nicht runde Form aufweist, die vorzugsweise zu einer durch den Schlitz verlaufenden radialen Ebene spiegelsymmetrisch ist.

Nach einer besonders bevorzugten Ausführungsform der Erfindung ist das erste Bauteil eine Welle oder ein Wellenzapfen im Antriebsstrang eines Fahrzeuges und das zweite Bauteil ist eine mit einer zentralen Öffnung versehene Innennabe eines Kugelgelenkes. Derartige Wellenanordnungen sind beispielsweise in Längs- oder Seitenwellen von Kraftfahrzeugen zur Übertragung eines Drehmomentes von einem Antriebsaggregat zu angetriebenen Rädern vorgesehen. Aufgrund der oben beschriebenen Nachteile herkömmlicher Sicherungsringe war bisher die Anbindung eines Wellenzapfens an eine Innennabe eines Kugelgelenkes mit einem Sicherungsring nur schwer möglich. Es wurde daher häufig eine Wellenmutter zur Verbindung eines Wellenzapfens mit der Innennabe eines Kugelgelenkes eingesetzt. Demgegenüber weist die erfindungsgemäße Verbindungsanordnung die Vorteile eines geringeren Gewichtes sowie eines geringeren erforderlichen Bauraumes auf.

Der Neigungswinkel der wenigstens einen definierten Schräge ist vorzugsweise derart gewählt, dass die zum Lösen der Verbindung erforderliche Kraft größer als die maximale in dem Antriebsstrang in Folge Reibung und/oder Massenträgheit übertragbare axiale Kraft ist. In einem Antriebsstrang sind zwischen zwei Lagerpunkten meist Verschiebegelenke, Verschiebeanordnungen und/oder elastische Elemente vorgesehen, die ein gewisses axiales Spiel bzw. eine definierte Verschiebebewegung des Antriebsstranges ermöglichen. Die hierbei maximal in dem Antriebsstrang übertragbare axiale Kraft wird im Wesentlichen durch die Reibung derartiger Verschiebeelemente und deren Massenträgheit beeinflusst. Erfindungsgemäß ist der Neigungswinkel der wenigstens einen Schräge daher derart gewählt, dass die im Betrieb auftretenden maximal auf den Antriebsstrang wirkenden axialen Kräfte von der Verbindungsanordnung übertragen werden können. Erst bei einer darüber liegenden vorbestimmbaren axialen Last wird die Verbindungsanordnung zerstörungsfrei gelöst.

Nach der Erfindung ist das erste Bauteil in das zweite Bauteil einsteckbar und mittels wenigstens eines Dichtungsringes abdichtbar, wobei wenigstens ein Dichtungsring in Einsteckrichtung hinter dem Sicherungsring angeordnet ist. Mit anderen Worten ist der Sicherungsring im montierten Zustand der Verbindungsanordnung in größerer axialer Entfernung von dem sich während des Einsteckens an das erste Bauteil annähernden stirnseitigen Ende des zweiten Bauteils positioniert als der Dichtungsring. Wenn das erste Bauteil ein Wellenzapfen oder dergleichen ist, der in eine Hülse oder Innennabe eines Gelenks einsteckbar ist, ist der Sicherungsring folglich näher an dem stirnseitigen Ende des Wellenzapfens angeordnet als der Dichtungsring.

Auf diese Weise ist es möglich, auch den Sicherungsring abzudichten, so dass eine Verschmutzung in dem Verbindungsbereich der beiden Bauteile durch den Sicherungsring ausgeschlossen werden kann, so dass eine spätere Demontage der Verbindungsanordnung erheblich erleichtert wird. Ein weiterer Vorteil dieser erfindungsgemäßen Anordnung liegt darin, dass der Dichtungsring nur eine minimale Wegstrecke während des Einsteckens des ersten Bauteils in das zweite Bauteil verschoben werden muss, wodurch sich die Gefahr einer Beschädigung des Dichtungsrings erheblich reduziert. Von besonderem Vorteil ist dabei, dass der Dichtungsring nicht die Nut in dem ersten bzw. zweiten Bauteil passieren muss, in welcher der Sicherungsring einrasten kann. Eine Beschädigung des Dichtungsringes beim Passieren der Kanten dieser Nut ist somit auszuschließen.

Die Erfindung wird nachfolgend anhand von Ausführungsbeispielen und unter Bezugnahme auf die Zeichnung näher erläutert.

Es zeigen:
- Fig. 1: eine Seitenansicht eines Sicherungsringes nach einer ersten Ausführungsform der Erfindung,
- Fig. 2: eine Draufsicht auf den Sicherungsring nach Fig. 1,
- Fig. 3: einen Schnitt durch das Profil des Sicherungsrings nach Fig. 1,
- Fig. 4: einen Schnitt durch das Profil eines Sicherungsrings nach einer zweiten Ausführungsform der Erfindung,
- Fig. 5: einen Schnitt durch das Profil eines Sicherungsrings nach einer dritten Ausführungsform der Erfindung,
- Fig. 6: eine Draufsicht auf einen Sicherungsring nach einer vierten Ausführungsform der Erfindung und
- Fig. 7: eine erfindungsgemäße Verbindungsanordnung.

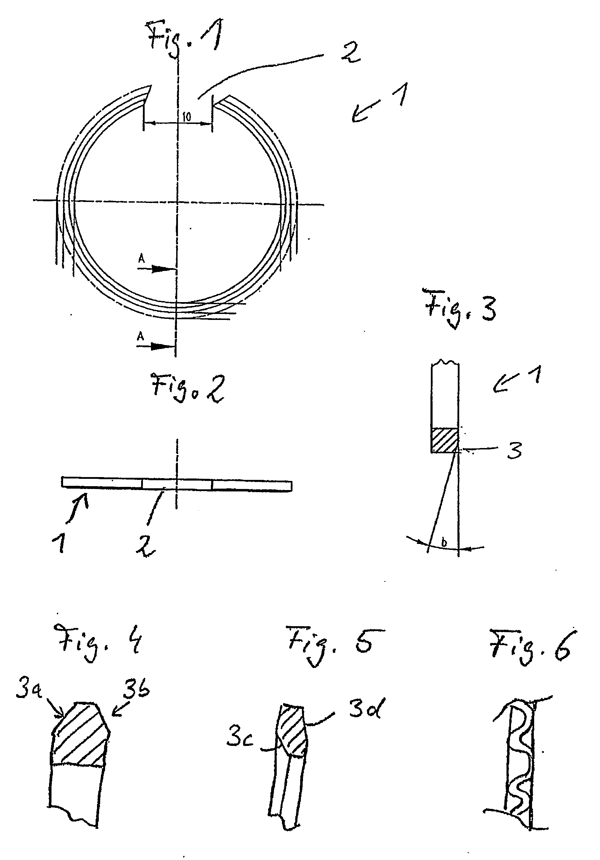

Der in den Figuren 1 bis 3 dargestellte Sicherungsring 1 weist in axialer Richtung gesehen eine im Wesentlichen runde Gestalt mit einem Schlitz 2 auf, der ein radiales Aufweiten oder Zusammendrücken des Sicherungsringes 1 gestattet. Wie aus Figur 3 ersichtlich ist, hat der Sicherungsring 1 im Querschnitt ein im Wesentlichen rechteckiges Profil. Bei der Ausführungsform nach Figur 3 ist an einer der radialen Außenkanten des Sicherungsringes 1 eine Schräge 3 vorgesehen, welche in einem Winkel von etwa 15° gegenüber der radial verlaufenden Seitenfläche des Sicherungsrings 1 geneigt ist. Zur Verbindung zweier Bauteile und zum Lösen dieser Verbindung muss der Sicherungsring 1 ausreichend elastisch sein und kann hierzu beispielsweise aus Federstahl bestehen.

In den Figuren 4 und 5 sind zwei weitere Ausführungsformen eines Sicherungsrings dargestellt, wobei bei der Ausführungsform nach Figur 4 beide radial äußeren Kanten des Sicherungsrings mit definierten Schrägen 3a bzw. 3b versehen sind. Dagegen ist bei der Ausführungsform nach Figur 5 eine radial äußere Kante und eine radial innere Kante des Sicherungsrings mit einer Schräge 3c bzw. 3d versehen.

Wie in Figur 2 dargestellt ist, hat der Sicherungsring 1 in seiner Draufsicht die Gestalt einer ebenen Scheibe. Dagegen ist bei der Ausführungsform nach Figur 6 der Sicherungsring mit einem gewellten Profil versehen, so dass der Sicherungsring auch ein axiales Spiel ausgleichen kann.

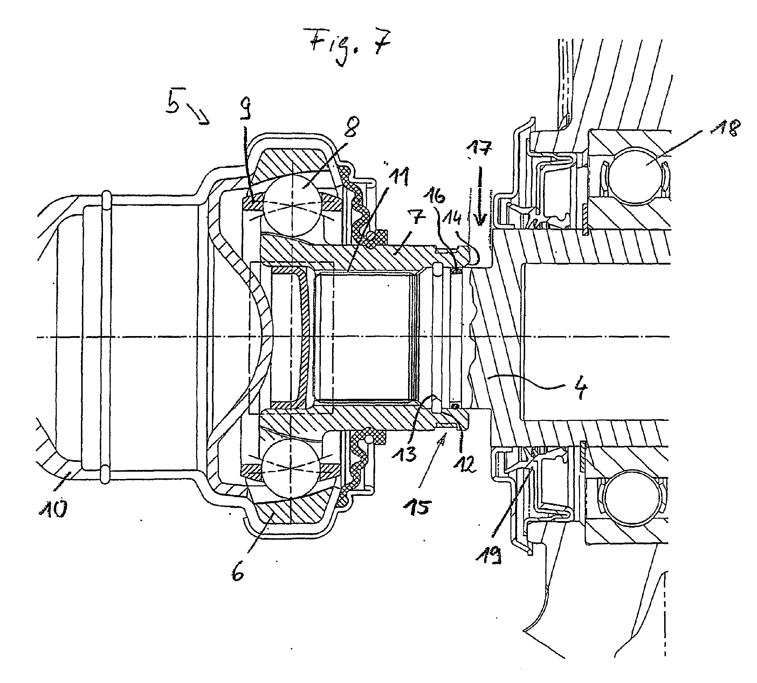

In Figur 7 ist eine erfindungsgemäße Verbindungsanordnung dargestellt, bei welcher ein getriebeseitiger Wellenzapfen 4 über einen Sicherungsring 1 mit einem Kugelgelenk 5 verbunden ist. Das Kugelgelenk weist hierbei eine Außennabe 6 mit mehreren als Gegenbahnen ausgebildeten Laufrillen sowie eine Innennabe 7 auf, die ebenfalls mit als Gegenbahnen ausgebildeten Laufrillen versehen ist. In den einander paarweise zugeordneten Laufrillenpaaren der Außennabe 6 und der Innennabe 7 sind jeweils Kugeln 8 aufgenommen, die in einem Käfig 9 geführt sind. Hierdurch kann ein Drehmoment von der Innennabe 7 auf die Außennabe 6 sowie eine mit dieser verbundene Hohlwelle 10 übertragen werden.

Zur Drehmomentübertragung zwischen der Innennabe 7 und dem Wellenzapfen 4 kann die Innennabe 7 innen und der Wellenzapfen 4 außen mit einer Keilverzahnung 11 versehen sei. Der Wellenzapfen 4 lässt sich somit drehfest in die Innennabe 7 einschieben und braucht lediglich über den Sicherungsring 1 axial fixiert zu werden.

Sowohl in der Innennabe 7 als auch auf dem Wellenzapfen 4 sind einander zugeordnete Nuten 12 bzw. 13 vorgesehen. In die Nut 13 auf dem Wellenzapfen 4 kann ein Sicherungsring 1 der oben beschriebenen Art eingebracht werden, der im unbelasteten Zustand zumindest abschnittsweise aus der Nut 13 herausragt. Zur axialen Anbindung des Wellenzapfens 4 an die Innennabe 7 wird der Wellenzapfen 4 in die Innennabe 7 eingesteckt, wobei der Sicherungsring 1 durch eine Einführschräge 14 an der Stirnseite der Innennabe 7 in die Nut 13 gedrängt wird. Sobald die Nuten 12 und 13 in Ihrer in Figur 7 dargestellten einander zugeordneten Position angeordnet sind, schnappt der Sicherungsring 1 unter radialer Aufweitung in Folge seiner Vorspannung auch in die Nut 12 der Innennabe 7. Hierdurch ist die Verbindung zwischen der Innennabe 7 und dem Wellenzapfen 4 hergestellt.

Auf der Außenseite der Innennabe 7 kann eine Montagenut 15 vorgesehen sein, die den Eingriff eines Werkzeuges zum Zusammenschieben der Innennabe 7 und des Wellenzapfens 4 erlaubt. Weiter kann auf dem Wellenzapfen 4 eine weitere Nut zur Aufnahme eines Dichtungsringes 16 vorgesehen sein.

Zum Lösen der Verbindung zwischen dem Wellenzapfen 4 und der Innennabe 7 kann ein Werkzeug in den Demontagespalt 17 zwischen der Stirnseite der Innennabe und einem Absatz des Wellenzapfens 4 eingebracht werden, wodurch sich die Innennabe 7 von Wellenzapfen 4 abdrücken lässt. Hierbei kommt eine Kante der Nut 12 der Innennabe 7 mit der Schräge 3 des Sicherungsringes 1 in Anlage. Die Kante der Nut 12 gleitet dabei über die Schräge 3 des Sicherungsringes 1 und drängt diesen hierbei radial nach innen in die Nut 13, so dass die Innennabe 7 von der Welle abgezogen werden kann.

Die Montage und/oder Demontage der Verbindung zwischen dem Wellenzapfen 4 und der Innennabe 7 kann auch mittels eines maulförmigen Werkzeuges erfolgen, welches in die Montagenut 15 bzw. in den Demontagespalt 17 einsetzbar ist. Dieses in der Figur nicht dargestellte Werkzeug kann mit einer Stange versehen sein, auf der ein Gewicht verschiebbar gelagert ist. Weiter ist an der Stange wenigstens eine Prallfläche vorgesehen, gegen die das Gewicht geschlagen werden kann, so dass von der Stange ein Impuls auf das maulartige Werkzeug übertragen wird, das somit die Innennabe 7 auf den Wellenzapfen 4 schiebt bzw. von diesem abzieht.

Die in Figur 7 gezeigt Verbindungsanordnung ist nicht nur leichter und kompakter als herkömmliche Verbindungsanordnungen mit einer Wellenmutter, sondern ermöglicht es auch, den Wellenzapfen 4 klein zu halten. Hierdurch können vorteilhafterweise Lager 18 und Wellendichtringe 19 mit vergleichsweise kleinem Durchmesser eingesetzt werden.

Wie in Figur 7 dargestellt, ist die Verbindungsanordnung nach einer bevorzugten Ausführungsform der Erfindung derart ausgestaltet, dass der Wellenzapfen 4 einen in Figur 7 linken Abschnitt, der in Einsteckrichtung vorne liegt, aufweist, welcher mit der Profilierung 11 (Keilverzahnung) versehen ist, sowie einen in Figur 7 rechten Abschnitt, welcher mit Ausnahme der Nuten zur Aufnahme des Sicherungsrings und des Dichtungsringes 16 im Wesentlichen zylindrisch gestaltet ist. Auch die hülsenförmige Innennabe 7 weist einen korrespondierenden Abschnitt mit einer Innenverzahnung auf und einen in der Nähe des in Figur 7 rechten stirnseitigen Endes gelegenen im Wesentlichen zylindrischen Innenabschnitt, in welchem die Nut 12 zur Aufnahme des Sicherungsrings vorgesehen ist.

Der Dichtungsring 16 liegt dabei weiter außen, das heißt näher an dem in Figur 7 rechten Ende der Innennabe 7 als der Sicherungsring. Der Dichtungsring 16 muss daher während der Montage keinen profilierten Abschnitt 11 der Innennabe 7 passieren und über keine Nut 12 für den Sicherungsring geschoben werden. Zusammen mit der Anlage des Dichtungsrings an der zylindrischen Innenfläche der Innennabe 7 ermöglicht dies nicht nur eine gute Abdichtung sondern verhindert auch eine Beschädigung des Dichtungsringes. Auf diese Weise lässt sich auch der Sicherungsring vor Verschmutzung, die beispielsweise über den Demontagespalt 17 eindringen könnte, wirksam abdichten.

## Patentansprüche

1. Verbindungsanordnung aus einem ersten Bauteil (4), das zumindest abschnittsweise eine im Wesentlichen zylindrische Außenfläche aufweist, und einem zweiten Bauteil (7), das zumindest abschnittsweise eine im Wesentlichen zylindrische Innenfläche zur Aufnahme der zylindrischen Außenfläche des ersten Bauteils (4) aufweist, und mit einem Sicherungsring (1), der zur Verbindung der beiden Bauteile (4, 7) in einander zugeordneten Nuten (12, 13) in der Außenfläche und der Innenfläche einbringbar ist,
wobei der Sicherungsring (1) aus einem elastischen Material, insbesondere Federstahl, besteht und mit einem beispielsweise radial verlaufenden Schlitz (2) versehen ist,
wobei das erste und/oder das zweite Bauteil (4, 7) angrenzend an die Innen- bzw. Außenfläche wenigstens eine Einführschräge (14) aufweist,
**dadurch gekennzeichnet,**
**dass** das erste Bauteil (4) in das zweite Bauteil (7) einsteckbar und mittels wenigstens eines Dichtungsrings (16) abdichtbar ist, wobei der wenigstens eine Dichtungsring (16) in Einsteckrichtung hinter dem Sicherungsring (1) angeordnet ist,
**dass** der Sicherungsring (1) ein Profil mit einem im Wesentlichen rechteckigen Querschnitt aufweist, dessen wenigstens eine Kante mit einer definierten Schräge (3) zur Montage und/oder Demontage des Sicherungsrings (1) versehen ist,
**dass** wenigstens eine der einander zugeordneten Nuten (12, 13) am Übergang zu der Außen- oder Innenfläche eine definierte Schräge und/oder Abrundung aufweist,
und
**dass** die wenigstens eine Schräge (3) des Sicherungsrings (1) und die wenigstens eine Schräge der Nuten (12, 13) derart aneinander angepasst sind, dass die Schrägen bei einer axialen Bewegung der beiden Bauteile (4, 7) relativ zu einander in Anlage kommen und den Sicherungsring (1) radial nach innen oder radial nach außen drängend aufeinander gleiten.

2. Verbindungsanordnung nach Anspruch 1,
**dadurch gekennzeichnet, dass** die wenigstens eine definierte Schräge (3) in einem Winkel zwischen etwa 15° und etwa 35° gegenüber einer radialen Seitenfläche des Sicherungsrings (1) geneigt verläuft.

3. Verbindungsanordnung nach einem der Ansprüche 1 bis 2, wobei das erste Bauteil (4) eine Welle oder einen Wellenzapfen im Antriebsstrang eines Fahrzeugs ist und das zweite Bauteil (7) eine mit einer zentralen Öffnung versehene Innennabe eines Kugelgelenks ist.

4. Verbindungsanordnung nach Anspruch 3,
**dadurch gekennzeichnet, dass** der Neigungswinkel der wenigstens einen definierten Schräge (3) derart gewählt ist, dass die zum Lösen der Verbindung erforderliche Kraft größer als die maximal in dem Antriebsstrang in Folge Reibung und/oder Massenträgheit übertragbare axiale Kraft ist.

## Claims

1. Connecting arrangement consisting of a first component (4) which has, at least partially, a substantially cylindrical outer surface, and a second component (7) which has, at least partially, a substantially cylindrical inner surface for accommodating the cylindrical outer surface of the first component (4), and with a securing ring (1) which, in order to connect the two components (4, 7), can be introduced into mutually assigned grooves (12, 13) in the outer surface and the inner surface, wherein the securing ring (1) is made of an elastic material, in particular spring steel, and is provided with a, for example, radially extending slot (2), wherein the first and/or the second component (4, 7) has at least one lead-in bevel (14) adjoining the inner or outer surface, **characterized in that** the first component (4) can be inserted into the second component (7) and can be sealed by means of at least one sealing ring (16), wherein the at least one sealing ring (16) is arranged behind the securing ring (1) in the insertion direction, **in that** the securing ring (1) has a profile with a substantially rectangular cross section of which at least one edge is provided with a defined bevel (3) for the assembly and/or disassembly of the securing ring (1), **in that** at least one of the mutually assigned grooves (12, 13) has a defined bevel and/or rounding at the transition to the outer or inner surface, and **in that** the at least one bevel (3) of the securing ring (1) and the at least one bevel of the grooves (12, 13) are adapted to one another in such a way that upon an axial movement of the two components (4, 7) relative to one another the bevels come into contact and slide on one another, thereby forcing the securing ring (1) radially inwardly or radially outwardly.

2. Connecting arrangement according to Claim 1, **characterized in that** the at least one defined bevel (3) extends inclined at an angle between about 15° and about 35° with respect to a radial lateral surface of the securing ring (1).

3. Connecting arrangement according to either of Claims 1 and 2, wherein the first component (4) is a shaft or a shaft journal in the drive train of a vehicle and the second component (7) is an inner hub, provided with a central opening, of a ball joint.

4. Connecting arrangement according to Claim 3, **characterized in that** the angle of inclination of the at least one defined bevel (3) is selected such that the force required for releasing the connection is greater than the maximum axial force which can be transmitted in the drive train as a result of friction and/or mass inertia.

## Revendications

1. Système de liaison constitué d'un premier composant (4), qui présente au moins par sections une surface extérieure essentiellement cylindrique, et d'un deuxième composant (7), qui présente au moins par sections une surface intérieure essentiellement cylindrique pour recevoir la surface extérieure cylindrique du premier composant (4), et comprenant une bague de fixation (1) qui peut être insérée dans des rainures (12, 13) associées l'une à l'autre dans la surface extérieure et la surface intérieure pour la liaison des deux composants (4, 7),
la bague de fixation (1) étant constituée d'un matériau élastique, en particulier d'acier à ressorts, et étant pourvue d'une fente (2) s'étendant par exemple radialement, le premier et/ou le deuxième composant (4, 7) comprenant au moins un biseau d'insertion (14) de manière adjacente à la surface intérieure ou à la surface extérieure,
**caractérise**
**en ce que** le premier composant (4) peut être enfiché dans le deuxième composant (7) et peut être rendu étanche au moyen d'au moins une bague d'étanchéité (16), l'au moins une bague d'étanchéité (16) étant disposée derrière la bague de fixation (1) dans la direction d'enfichage,
**en ce que** la bague de fixation (1) présente un profil avec une section transversale essentiellement rectangulaire dont au moins un côté est pourvu d'un biseau défini (3) pour le montage et/ou le démontage de la bague de fixation (1),
**en ce qu'**au moins l'une des rainures (12, 13) associées l'une à l'autre comprend un biseau et/ou un arrondi définis à la transition vers la surface extérieure ou intérieure,
et
**en ce que** l'au moins un biseau (3) de la bague de fixation (1) et l'au moins un biseau des rainures (12, 13) sont adaptés les uns aux autres de telle sorte que les biseaux viennent en appui les uns contre les autres lors d'un déplacement axial des deux composants (4, 7) l'un par rapport à l'autre et glissent les uns sur les autres en poussant la bague de fixation (1) radialement vers l'intérieur ou radialement vers l'extérieur.

2. Système de liaison selon la revendication 1, **caractérisé en ce que** l'au moins un biseau défini (3) s'étend de manière inclinée suivant un angle d'entre approximativement 15° et approximativement 35° par rapport à une surface latérale radiale de la bague de fixation (1).

3. Système de liaison selon la revendication 1 ou 2, dans lequel le premier composant (4) est un arbre ou un tourillon d'arbre dans la chaîne cinématique d'un véhicule et le deuxième composant (7) est un moyeu intérieur d'une articulation à rotule pourvu d'une ouverture centrale.

4. Système de liaison selon la revendication 3, **caractérisé en ce que** l'angle d'inclinaison de l'au moins un biseau défini (3) est sélectionné de telle sorte que la force nécessaire pour libérer la liaison soit supérieure à la force axiale maximale transmissible dans la chaîne cinématique en conséquence du frottement et/ou de l'inertie.
